# EUROPEAN PATENT APPLICATION

(11) **EP 1 207 331 A2**
(43) Date of publication of application: **22.05.2002**
(21) Application number: 00830839.7
(22) Date of filing: 22.12.2000
(51) Int. Cl.: F16L 1/032, H02G 1/06, E02F 5/10

(54) **Machine for laying underground pipes, electrical cables, optical fibres or similar, and device for pushing the pipes associated with this machine**

(30) Priority: 16.11.2000 IT UD000210
(71) Applicant: Tesmec SpA, 20123 Milano (IT)
(72) Inventor: Lazzati, Marco, 21100 Varese (IT)
(74) Representative: Petraz, Gilberto Luigi

(57) **Abstract**

Machine for laying underground pipes, electrical cables, optical fibres or similar (15), comprising at least a movable structure (12) able to support and move at least a digging tool (13) able to make a seating (14) inside which said pipes (15) are positioned, means (11) to feed the pipes able to support and supply said pipes (15) to be laid underground and guide means (16) able to guide said pipes (15) inside said seating (14), at least a pipe-pushing device (20) being included in co-operation with said guide means (16), said pipe-pushing device (20) being able to push said pipes, electrical cables, optical fibres or similar (15) into said seating (14), keeping them in the correct laying position.

## Description

### FIELD OF THE INVENTION

The invention concerns a machine used in the field of civil engineering able to lay underground pipes, electrical cables, optical fibres or similar, full or hollow, of various shapes and diameters, equipped with a pipe-pushing device able to facilitate the laying of the pipes and to condition the correct positioning of the pipes or similar in a particular position in the relative excavation.

The pipe-pushing device according to the invention substantially consists of at least a shaped drive roller cooperating with at least a mating shaped idle roller, advantageously movable at least radially with respect to the relative drive roller according to the diameter and shape of the pipes to be laid.

### BACKGROUND OF THE INVENTION

In order to lay underground pipes, electrical cables, optical fibres or similar, in the state of the art machines are usually used which are able to perform various operations, such as for example making the excavations, unwinding and positioning the pipes and possibly subsequently re-covering the excavation with a cast of cement. These operations can be performed using different types of specialized machines, or with a single machine which allows to perform all three operations in close sequence, as described in the patent application number IT TO99A000829.

Conventional laying machines have their limitations due to the difficulty of positioning the pipes inside the excavation; in fact, the pipes do not always rest correctly on the bottom of the excavation and it is equally problematical to arrange them in an orderly manner once they have been positioned, particularly in the case when two or more adjacent or overlapping pipes are laid simultaneously.

This entails a considerable difficulty for the workers who will have to carry out possible maintenance or inspection work, since the overlapping of the pipes may cause problems for the worker about which pipe he has to work on. Moreover, if the pipes are tangled or overlapping, this may entail malfunctioning, different lengths of the pipes positioned and the pipes may possibly break. During the laying operation the pipes may reciprocally slip which will make the arrangement of the pipes imperfect.

The present Applicant has devised and embodied this invention to overcome the shortcomings of the state of the art and to obtain further advantages.

### SUMMARY OF THE INVENTION

The invention is set forth and characterized in the main claims, while the dependent claims describe other innovative characteristics of the invention.

The main purpose of the invention is to achieve a machine equipped with an auxiliary device able to facilitate the laying of pipes, electric cables, optical fibres or similar in such a manner that said pipes etc. are positioned in an orderly fashion in the relative seating, preventing entanglements or twisting thereof.

To be more exact, the auxiliary device is suitable to operate both on a single pipe and simultaneously on a plurality of adjacent or overlapping pipes, even of a different shape and diameter.

The machine according to the invention substantially consists of a movable structure with which at least a digging tool, means to feed the pipes to be laid and guide means for said pipes are associated.

According to the invention, in co-operation with the guide means there is at least an auxiliary device to push the pipes, arranged preferably in a position near the surface on which the excavation is made.

During the laying operation, the movable structure moves along the pre-determined travel and the digging tool excavates to define the seating in the ground where the pipes will be laid. Simultaneously, the feed means supply the pipes to be laid which, by means of the guide means, are positioned in the seating.

The function of the pipe-pushing device according to the invention, in co-operation with the guide means, is to facilitate the unwinding and laying of the pipes, ensuring they are positioned neatly and correctly in the relative seating.

The device substantially consists of at least a drive roller and one or more mating idle rollers, arranged with an axis of rotation substantially parallel to that of the drive roller. In a preferential embodiment, the outer surface of the drive roller is lined with a layer of material with a high friction coefficient, such as for example adiprene®; the outer surface is also equipped with grooves, advantageously mating in number with the number of the idle rollers, which define relative transit seatings inside which the pipes are inserted and pushed towards the excavation, being kept substantially parallel or overlapping, in the correct laying position for the whole of their advance.

According to a preferential embodiment of the invention, the reciprocal position of the drive roller and every single idle roller can be regulated at least radially so as to adapt to different shapes and diameters of the pipes to be laid. In this way, the pipe-pushing device according to the invention can be adapted to cooperate simultaneously with adjacent or overlapping pipes with a different diameter, by regulating the radial position of each idle roller individually; this allows to accelerate and rationalize the laying operations.

According to a variant, in co-operation with each of the idle rollers there are elastic means able to keep the relative roller constantly pressing against the relative pipe during the laying step.

Therefore, in the machine according to the invention, the pipe or pipes progressively supplied by the feed means enter the pipe-pushing device, where they are initially directed according to the correct position which they have to assume in the seating, and then thrust towards the guide means which provide to channel them and press them into the seating.

According to a variant, between the drive roller and the relative drive motor there is at least a free wheel able to at least temporarily free the speed of rotation of the motor and the speed at which the pipes are fed, which is linked to the conditions of feed and displacement of the machine.

According to another variant, in co-operation with the drive roller there is at least a clutch which functions as a safety system for the motor, against accidental blockages or jamming of the pipes to be laid.

In one embodiment of the invention, a cementing device is associated with the machine according to the invention, which is able to re-cover the excavation after the relative pipes have been positioned.

### BRIEF DESCRIPTION OF THE DRAWINGS

These and other characteristics of the invention will become clear from the following description of a preferential form of embodiment, given as a non-restrictive example with reference to the attached drawings wherein:

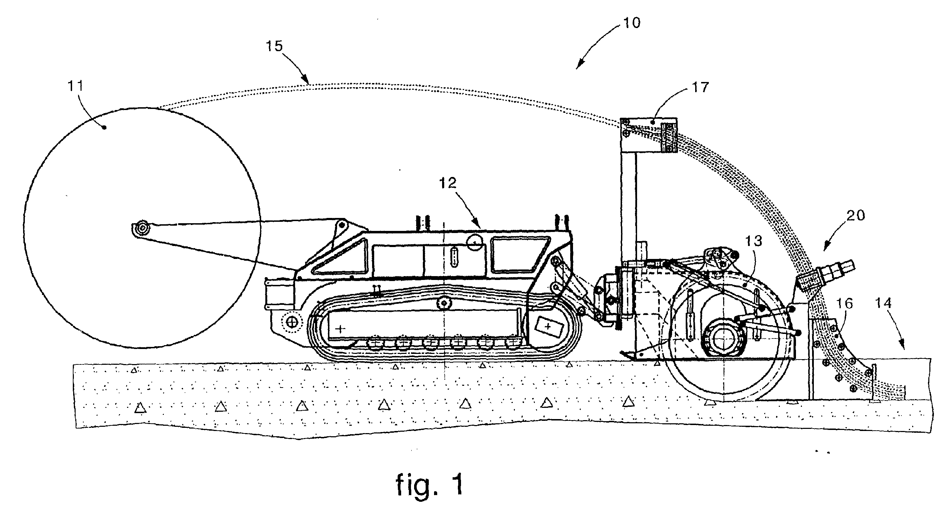

- Fig. 1: is a side view of a machine for laying underground pipes, electrical cables or similar according to the invention;

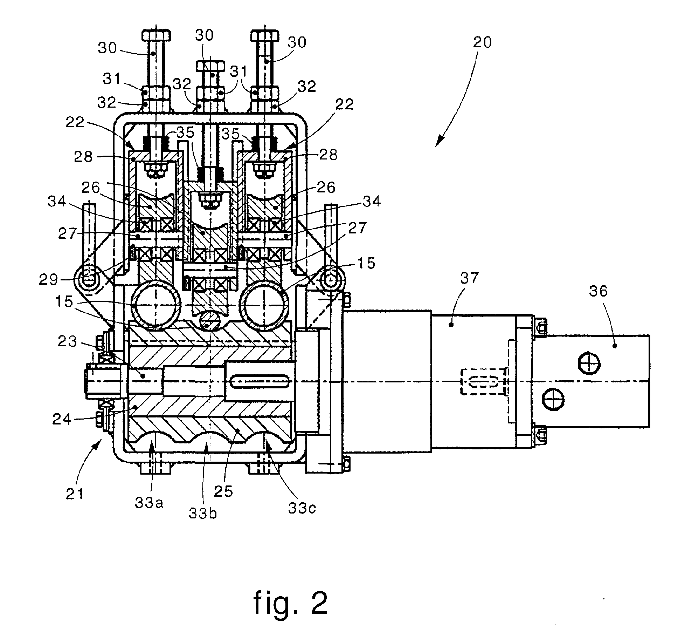

- Fig. 2: is a partly sectioned view of the pipe-pushing device according to the invention.

### DETAILED DESCRIPTION OF A PREFERENTIAL EMBODIMENT

With reference to the attached drawings, the number 10 denotes in its entirety a machine able to lay underground pipes, electrical cables, optical fibres or similar, according to the invention.

In this case, the machine 10 is substantially formed by a tractor with tracks 12; to the rear part is connected a digging tool 13, formed in this case by a milling cutter able to make a seating 14 in the ground to position pipes or similar 15, and to the front part is connected a pipe-bearing reel 11 able to support and supply the pipes 15. A direction assembly 17 is also assembled on the machine 10, able to reciprocally arrange the pipes 15 according to the direction which they will assume inside the seating 14; there is also a guide element 16, formed by a rollerway which is inserted in depth inside the seating 14 and defines a transit duct able to channel the pipes 15 into the seating 14.

The machine 10 also has a pipe-pushing device 20 according to the invention, consisting in this case of a drive roller 21 and three idle rollers 22; the idle rollers 22 have their axis of rotation substantially parallel to the axis of rotation of the drive roller 21.

The drive roller 21 is formed by a first inner roller 24, for example made of metal, and a second outer roller 25 made of rubber material, for example adiprene®, coaxial and solid with the first and shaped in such a manner as to define three grooves, 33a, 33b, 33c, able to allow the pipes 15 to be introduced, gripped and to transit in guided fashion, and subsequently to be thrust towards the seating 14.

The drive roller 21 is moved by means of a shaft 23 coupled by means of a key to the inner roller 24; the shaft 23 is driven, in this case, by a hydraulic motor 36 by means of a reduction gear 37.

In a preferential embodiment of the invention, the hydraulic motor 36 is inserted in a feed circuit suitable to automatically adapt the speed of rotation to the speed of advance of the machine 10 on the ground.

The idle rollers 22, in this case, are substantially identical and each is formed by a little wheel 26 shaped and positioned so that it is opposite and specular to the respective groove 33a, 33b, 33c on the surface of the drive roller 21. The wheel 26 rotates, assisted by a pair of spherical bearings 34, around a pin 27 which is attached, at the ends, to the two arms of a fork 28 by means of a threaded dowel 29.

The fork 28 has a threaded rod 30 which can be used to regulate, individually and independently, the distance between the axis of each wheel 26 and the axis of the drive roller 21 according to the diameter of each of the pipes 15 to be laid; the threaded rod 30 cooperates, to clamp the relative wheel 26 in position, with a nut 32 and relative lock nut 31. In this way, the pipe-pushing device 20 can operate simultaneously on adjacent or overlapping pipes 15 of a different diameter and/or shape. For each of the threaded rods 30, there are also cup-type springs 35 able to keep the relative wheel 26 constantly pressing against the pipes 15.

The machine as described heretofore is used as follows.

The tractor 12 advances in the direction where the pipes have to be positioned, drawing with it the tool 13 which does the excavation. At the same time as the excavation is made, the reel 11 unwinds, allowing the pipes 15, three in this case, to unroll; the pipes 15 are first directed by the direction assembly 17 in the direction wherein they are able to be channelled into the seating 14, and then enter the pipe-pushing device 20, arranging themselves with interference between the grooves 33a, 33b, 33c of the drive roller 21 and the shaped wheels 26 of the idle rollers 22. By activating the drive roller 21, the device 20 pushes the pipes 15 towards the guide element 16, causing them to be deposited in the seating 14 in the substantially parallel or overlapping fashion given thereto by the device 20, thus preventing the pipes 15 from intersecting or twisting with respect to each other, or from sliding and becoming offset with respect to each other.

It is obvious however that modifications and/or additions can be made to the machine 10 for laying underground pipes, electrical cables, optical fibres or similar as described heretofore, without departing from the spirit and scope of the invention.

For example, the system to drive the drive roller 21 can be equipped with safety systems, for example with a clutch, able to release the motor 36 from the shaft 23 if there are accidental blockages or jams of the pipes 15 during the laying operation. Another embodiment may provide to include a free wheel between the reduction unit 37 and the inner roller 24; the free wheel is suitable to rotate engaged with the shaft 23 in one direction only, while it is idle in the opposite direction, thus allowing to free the speed of the motor 36 at least temporarily from the speed of feed of the pipes 15.

It is also possible to include alarm systems or systems to signal malfunctions or blockages.

Moreover, in co-operation with the machine 10 it is possible to provide a tank of liquid cement which serves to feed a nozzle able to cover with cement the seating 14 with the pipes 15 positioned inside.

In another embodiment, the tractor 12 can be of the radio controlled type to perform remote controlled operations.

It is also obvious that, although the invention has been described with reference to specific examples, a skilled person shall certainly be able to achieve many other equivalent forms of a machine for laying underground pipes, electrical cables, optical fibres or similar and the relative pipe-pushing device, all of which shall come within the field and scope of this invention.

## Claims

1. Machine for laying underground pipes, electrical cables, optical fibres or similar (15), comprising at least a movable structure (12) able to support and move at least a digging tool (13) able to make a seating (14) inside which said pipes (15) are positioned, means (11) to feed the pipes able to support and supply said pipes (15) to be laid underground and guide means (16) able to guide said pipes (15) inside said seating (14), the machine being **characterized in that** at least a pipe-pushing device (20) is included in co-operation with said guide means (16), said pipe-pushing device (20) being able to push said pipes, electrical cables, optical fibres or similar (15) into said seating (14), keeping them in the correct laying position.

2. Machine as in Claim 1, **characterized in that** it comprises a direction assembly (17) arranged upstream of said pipe-pushing device (20) and able to reciprocally arrange the pipes (15) according to the direction which they assume in the seating (14).

3. Machine as in Claim 1, **characterized in that** said means to feed the pipes comprise a reel (11) able to progressively unwind said pipes (15) during the movement of said movable structure (12).

4. Machine as in Claim 1, **characterized in that** said movable structure comprises a tractor with tracks (12).

5. Machine as in Claim 4, **characterized in that** said tractor (12) is able to be moved by radio control.

6. Pipe-pushing device able to cooperate with means (11) to feed pipes, electrical cables, optical fibres or similar (15) to lay them in a seating (14) made in the ground, the device being **characterized in that** it comprises a drive roller (21) and at least one mating idle roller (22), arranged opposite and with an axis of rotation substantially parallel to the axis of rotation of said drive roller (21), said drive roller (21) having on the surface groove means (33a, 33b, 33c) able to cooperate with mating shaped means made on said at least one idle roller (22) to allow at least a relative pipe (15) to pass and be pushed towards said seating (14).

7. Device as in Claim 6, **characterized in that** said drive roller (21) comprises an outer surface (25) consisting of rubber material with a high friction coefficient, for example adiprene®.

8. Device as in Claim 6, **characterized in that** it comprises a plurality of idle rollers (22) arranged opposite said drive roller (21), at least the radial position of each of said idle rollers (22) with respect to said drive roller (21) being adjustable independently from each other so as to allow pipes or similar (15) of different diameter or shape to be gripped and pushed simultaneously.

9. Device as in Claim 8, **characterized in that** each of said idle rollers (22) comprises a shaped wheel (26) rotating around a pin (27), said pin (27) being associated with fork means (28) cooperating with regulating means (30) able to modify the distance between the axis of said idle rollers (22) and the axis of said drive roller (21) according to the diameter and shape of said pipes or similar (15) to be laid underground.

10. Device as in Claim 9, **characterized in that** said pin (27) is attached to said fork means (28) by means of a threaded dowel (29).

11. Device as in Claim 9, **characterized in that** said regulating means comprise a threaded rod (30) associated with at least a nut (32) able to allow the height to be regulated, and with a lock nut (31) able to attach said threaded rod (30) at the desired height.

12. Device as in Claim 11, **characterized in that** between said threaded rod (30) and said fork means (28) there are elastic means (35) able to keep the relative wheel (26) under pressure against said pipes, electrical cables, optical fibres or similar (15).

13. Device as in Claim 6, **characterized in that** said drive roller (21) is associated with drive means (36, 37), safety means being included able to release said drive means from said drive roller (21) in the event of accidental blockages or jams.
